# EUROPEAN PATENT SPECIFICATION

(11) **EP 0 389 513 B1**
(45) Date of publication and mention of the grant of the patent: **13.07.1994**
(21) Application number: 88909602.0
(22) Date of filing: 04.11.1988
(51) Int. Cl.: B65D 65/38, A23L 1/08, A23F 5/24

(54) **PACKAGE FOR WATER-CONTAINING SUBSTANCES**
VERPACKUNG FÜR WASSERHALTIGE STOFFE
CONDITIONNEMENT POUR SUBSTANCES CONTENANT DE L'EAU

(30) Priority: 06.11.1987 GB 8726096
(43) Date of publication of application: 03.10.1990
(73) Proprietor: MARKBEECH PACKAGING LIMITED, Edenbridge, Kent TN8 5NX (GB)
(72) Inventor: KOSKA, Marc, Andrew, Royal Tunbridge Wells TN1 1DD (GB); HOLT, Eileen, Edenbridge Kent (GB)
(74) Representative: Keltie, David Arthur
(86) International application number: GB8800954
(87) International publication number: WO8904282

(56) References cited:
- EP-A- 0 199 034
- EP-A- 0 244 084
- FR-A- 2 087 185
- US-A- 3 322 674

## Description

The present invention relates to a filled package for dissolution in water according to the preamble of claim 1 and to a method of packaging according to the preamble of claim 18 (EP-A-0199034).

It has long been desirable to present concentrated water containing substances in the form of syrups, such as honey; honey or sugar mixtures with alcoholic drinks such as whisky or rum; honey or sugar mixtures with soft drink essences; with flavourings for beverage or culinary use; with other fluid water containing substances in convenience packaging containing a single known measure and in which the packaging itself dissolves in water. The advantages of such packaging are that the contents may be precisely weighted in single dose quantities and hermetically sealed ready for use. Moreover, in use in dissolving in water because the packaging itself can be put into the water and will dissolve completely, the user has no messy packaging to dispose of and can be sure that the entire contents of the package have been mixed. Hence accurate formulation of the desired end product can be achieved without needing to weigh or measure often small amounts of concentrated essence, flavouring, sweetener or the like. This is especially important in dealing with consumers and with sticky products such as honey and many paediatric medicines, or potentially harmful products such as agricultural chemicals.

In this specification the term concentrated aqueous syrup is used generically to include within its ambit concentrated aqueous solutions, precipitates or suspensions of any appropriate substance whether it be of a sweet, bland, sour, salt or other tasting food substance or mixture of food substances, or be a pharmaceutical, medical, or agricultural chemical substance or mixture of substances.

Turning now to honey, by way of example, a large proportion of the current production of honey is used for sweetening hot or cold drinks. The syrupy nature of honey makes this operation more difficult than the use of granular sugar. This difficulty is most severe in commercial beverage dispensing, whether by beverage dispensing machines or in premises such as cafes and restaurants. Containers of honey available for customers' use will rapidly become contaminated with honey on their outsides making them sticky and unattractive.

Honey is difficult to extract from any small container which might be provided containing a small quantity of honey suitable for sweetening an individual drink. Previously also any flavouring essence of the drink has been added separately from the honey.

Granular sugar itself presents some disadvantages in use. It is a solid, and can be slow to dissolve in water. It cannot be used with flavouring essences in liquid form, in convenient single use prepacks, in a form in which the packaging does not have to be separately disposed of.

Salts, such as gravy and sauce mixes and meat extracts have also not been sold in a single use form with the exception of solid powdered cubes, for reasons similar to sugar; if they have been sold as powders these require careful measuring, and if liquid, then the packaging has to be disposed of separately. Moreover, powdered gravy, sauce and other food substances such as custard are difficult to prepare without unpleasant and unpalatable lumps in the final product. In the case of flavouring essences, which are often in the form of concentrated syrups, the small quantities to be used have often been difficult to measure accurately, leading to uneven use and flavouring from one use to another.

Medicines are often presented as syrups, especially for paediatric applications, but such medicines are messy to use, and the dose administered varies with the size of the spoon used. Whilst medicines are often presented in gelatin capsules, these do not dissolve in the mouth and may be undesirable in some formulations.

EP-A-. 0199034 relates to capsules of soft gelatin which take a long time to dissolve in water and in which 2 to 20% by weight of glycerin is mixed with honey, invert sugar or sugar syrup in aqueous solution obtained as a filling in the capsules with the aims of preventing the capsules from being attacked by the aqueous sugar solutions, of preventing the aqueous sugar solutions from losing too much of their water content through the gelatin envelope for the capsules, and of reducing the viscosity and stickiness of the filling of the capsules.

Even where a substance is not for human consumption, it is useful to package it in packaging which can dissolve in water so that the packaging does not have to be separately disposed of so that messy or dangerous substances do not have to be handled, yet can be presented for use in precisely measured quantities.

Examples of such substances include aqueous based agricultural chemicals, for garden or farming use, detergents, and toiletries such as bath foams. Previously only solid or substantially water free substances (less than 10% water) have been proposed for presentation in water soluble packaging, although a laminated packaging with a water insoluble inner surface has been proposed, eg in UK Patent Specification No 954602. The disadvantage of the latter, especially for food use, is the presence of an insoluble residue after contact with water.

Although water soluble packaging films are known and are commercially available, including films of modified vegetable materials such as methyl cellulose which are known to be edible and have been approved for human consumption, and films of polyvinyl alcohol, they have in the past, only been used for packaging solids or fluid (flowable) substances which are substantially free of unbound water. This is because the water in water containing substances having substantial amounts of free water dissolved the film. Indeed, it has generally been considered that contact with fluid substances containing more than 2% of water should be sufficient to produce at least gradual dissolution of such films.

Accordingly, the object of the present invention is to provide a filled package for dissolution in water and to provide a method of packaging at least one substance, comprising a water soluble packaging material which is sealed to form the filled package, the filled package containing an aqueous syrup of at least one substance, in which the aforesaid disadvantages are minimized or avoided.

Applicants believe that they have discovered a principle, which is that the greater the concentration of the actual substance of water containing substance, i.e. a syrup, then the greater the retention of the syrup inside water soluble packaging without dissolution of the packaging. Whilst Applicants are not entirely certain as to how the increased concentration provides for retention with no dissolution without further experiments it is thought that the underlying principle involved may be osmosis.

From one aspect, the present invention consists in a filled package for dissolution in water, comprising a water soluble packaging material which is sealed to form the filled package, the filled package containing an aqueous syrup of at least one substance, characterised in that the water soluble packaging material is in the form of a heat sealable flexible film which is sealed to form the filled package, in that the water soluble packaging material is of methyl cellulose or derivatives thereof or polyvinyl alcohol and is capable of dissolving once wetted externally with water, in that the aqueous syrup is a concentrated aqueous syrup in which said substance has a concentration which is sufficiently high so that at room temperature the aqueous syrup is retained within the filled package and does not attack or dissolve the packaging material to the extent that over the desired storage range period the filled package is ruptured and in that the combination of said packaging material in the form of said heat sealable flexible film and said concentration of said substance in said concentrated aqueous syrup enables dissolution of said film and of said concentrated aqueous syrup once the packaging material has been wetted externally with water.

By means of the invention syrups of foodstuffs such as honey, medicines such as cough medicines, and agricultural chemicals such as herbicides can be retained within water soluble packages of water soluble film until wetted by water when the package and the syrup will be dissolved, leaving no residue of the package behind.

It is indeed surprising that the invention has made it possible to package honey and other concentrated aqueous syrups in such packaging, the packages remaining stable, i.e. dissolution is inhibited, until the user wets them, e.g. by immersion in water.

Moreover, Applicants believe that if osmosis is involved in syrup retention it will also be involved in dissolution so that once the package has been wetted externally with water, the dissolution of the packaging and the dissolving of the syrup in the water will take place far more rapidly, which constitutes a considerable advantage.

From another aspect, the present invention consists in a method of packaging at least one substance, in which a water soluble packaging material is sealed to form a filled package containing an aqueous syrup of at least one substance, characterised by providing a heat sealable flexible film formed from a water soluble packaging material of methyl cellulose or derivatives thereof or polyvinyl alcohol which is capable of dissolving once wetted externally with water, forming a package from said film and filling the package with a concentrated aqueous syrup of said substance which is retained within the filled package by having a concentration of the substance in the aqueous syrup that is sufficient to prevent the water in the aqueous syrup from attacking and dissolving the packaging material until the packaging material is wetted externally with water, the combination of said packaging material and said concentration of said substance in said aqueous syrup enabling dissolution of said film and of said aqueous syrup once said packaging material has been wetted externally with water.

Where the substance is honey, it may be of any consistency in which honey is usually available. The consistency may therefore range from a flowable liquid syrup (clear honey ) to a stiff syrup containing much precipitated sugar (set honey). The honey may be mixed with other water soluble substances, such as flavourings, essences, colouring or concentrated alcoholic beverages, such as whisky or rum. Other substances such as concentrated sugar solutions, salts in the form of meat extracts for sauces and gravies, concentrated extracts of tea or coffee, concentrated aqueous solutions of bath foams, detergents or agricultural chemicals such as herbicides may be used in the present invention. Mixtures of substances may also be used. Furthermore, in the case of food substances may also be used. Furthermore, in the case of food substances such as gravies, sauces and the like,freedom from lumps is ensured, since the solids in them are predissolved in water.

Sometimes the substances required to be stored are not highly soluble in water, so concentrated solutions cannot be achieved. In other cases, such as a flavouring, essence or medicine, only a small but carefully measured amount of the active ingredient is required. Where either of these occurs, a carrier such as honey, or a concentrated sugar solution can be used to increase the bulk, or to ensure that the concentration of the aqueous syrup is sufficiently high that dissolution of or attack on the packaging materials during storage is effectively prevented.

Accordingly, in preferred embodiments of both aspects of the invention, the syrup may include a carrier such as a sugar honey or salt for the active ingredient of the substance. It is immaterial that some of the substances in the package may be in the form of a precipitate, in suspension or in particulate solid form such as powdered herbs.

The package may be adapted for dissolution in hot water only, cold water only, or more preferably in hot and cold water by the choice of a suitable packaging material. The film used for packaging should be adapted so that it dissolves completely and does not form a gel at the highest temperature at which the package may ordinarily be immersed in water. Typically such temperatures should be 85°C for hot beverages, gravies and sauces, 65°C for bath water, and 45°C for cold beverages and agricultural chemicals. The optimum characteristics of such films should include a fairly rapid dissolution time at the normal temperature of immersion in water when filled, with stirring or shaking if appropriate. Increasing the film thickness increases dissolution time.

Packaging materials are available having the necessary solubility properties. Examples of these are methyl cellulose films and polyvinyl alcohol films. Methyl cellulose films or derivatives thereof being made of a modified vegetable material are particularly preferred as they are safe for human consumption. Polyvinyl alcohol films should only be used where the solution in the package is not for human consumption, for example in weed killers or bath foams. Preferably cast film should be used as it has more consistent characteristics, but extruded film may be used, if appropriate. Moreover, any other appropriate water soluble packaging materials may be used.

Such films have the advantage of being heat sealable, allowing easy formation of sealed packages containing aqueous syrups of virtually any desirable size. The size of the package may be for sweetening or flavouring an expected quantity of liquid for consumption such as an individual drink, or for an expected quantity of a sauce, or as a precise dose of a medicinal compound, or in a larger package for industrial culinary use or for packaging a measured quantity of an agricultural chemicals.

A further advantage of the invention for culinary and beverage use is that both honey and modified vegetable materials in particular methyl cellulose are thickeners. Thus where it is desired to create a relatively viscous food, beverage or other packaged product according to the invention, the appropriate amount of thickener can be incorporated in the actual substances, or by increasing the thickness of the packaging film or by a combination of both. The combination is determined by the speed of dissolution of the packaging, thicker packaging taking longer to dissolve, up to a maximum effective thickness, and the degree of added viscosity required. It is a novel feature of this invention that the packaging material can be used not only to contain the foodstuff or other product, but also as a thickener for the foodstuff or other product. This feature is particularly useful for cold drinks, sauce mixes and gravies, to give them body.

The honey or other syrup may be packaged into such packaging material by any of the methods for packaging liquids in plastics film packages conventionally used. These will include drawing a base sheet of plastics film by vacuum into wells to provide pockets which may be filled with the honey or other syrup and heat sealing a second layer of plastic over the first layer to provide joined packages which may then be separated for individual sale or may be sold in the joined form for separation by a user. The shape of the mould may be any suitable form for marketing purposes, such as hexagonal for efficient use of the packaging material, round, square, or in the shape of an animal or fruit. The surface of the film may be smooth, stippled or textured.

Similarly, packages may be formed by the technique of continuously forming a strip of film into a vertically running tube, continuously filling the tube with honey or other syrup, pinching and sailing the tube at spaced intervals horizontally form a series of linked packages, and optionally separating the packages.

The film may have incorporated in it flavouring or colouring, and may have printing on it or lettering or other motifs moulded into it. Where appropriate, the flavouring, colouring or printing ink shall be fit for human consumption. The film may also have incorporated in it other additives, to decrease oxygen permeability, and thus to increase the shelf life of the packaged product.

The package may be provided with an internal and/or external water soluble coating which may be e.g. a sugar or salt for example.

It is preferred that in the packaging method adopted, the film is sealed to itself when necessary by heat sealing. However, the use of adhesives is also acceptable provided, where appropriate the adhesive is fit for human consumption.

The syrup may be contained in an individual package which may optionally be connected by the packaging material to other similar packages. Where the packages are interconnected in this way, they are preferably separable from one another, e.g. by means of weak sections or perforations in the packaging material joining the said packages.

In order that the invention may be more readily understood, reference will now be made, byway of example, to the accompanying drawing, in which:-
Figure 1 is a plan view of one embodiment of a package which is made in accordance with the invention, and
Figure 2 is an end view of the package of Figure 1.

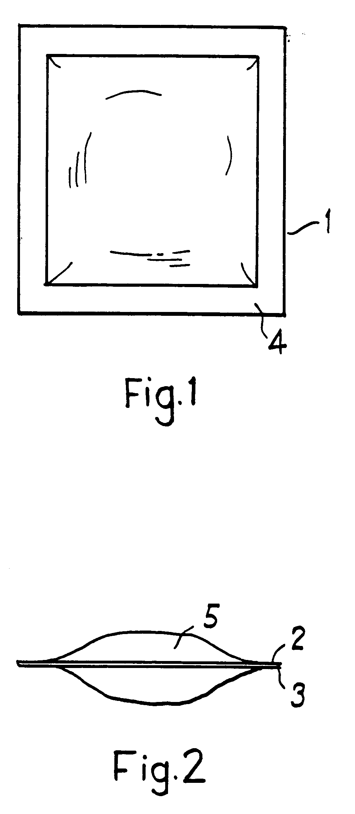

As shown in Figure 1, a package according to the invention comprises packaging the form of a sachet 1 composed of upper and lower sheets of polyvinyl alcohol or methylcellulose film 2,3 joined together in a zone forming a continuous rectangular path 4 by heat welding to enclose a pocket 5 containing a concentrated aqueous syrup such as a honey.

A sachet of this form containing honey may be dissolved in a drink for sweetening the drink and imparting a honey flavour.

By selecting the grade and nature of the film enclosing he sachet, it may be soluble in a cold drink such as milk, as well as in hot drinks.

The invention will now be further described with reference to the following. Examples in which a number of suitable syrups contained in heat sealed tubular sachets of methylcellulose were made.
1) Honey alone
2) Sugar alone
3) Honey and rum
4) Honey and whisky
5) Honey and vanilla essence
6) Honey and blackcurrant flavouring
7) Honey and concentrated orange juice
8) Honey and Paracetamol (TM)
9) Honey and instant coffee (Nescafe (TM))
10) Honey and Chivas Regal (TM)
11) Honey and alcohol
12) Honey and fresh lemon juice
13) Bovril (TM) meat extract
14) Marmite (TM)
As purchased solutions of
15) Honey and bath foam (Fenjal - TM)
16) Honey and liquid detergent (Fairy - TM)
It was found that all packages readily dissolved in water. Where it is desirable that the packages of the invention shall not be handled, they may be stored in and dispensed from a dispenser.

It should be understood that many modifications and variations may be made without departing from the scope of the invention which is defined by the claims. The requirement of wetting the outside of the package to dissolve it may be satisfied by water from the inside of the mouth, the stomach, or other similar sources.

## Claims

1. A filled package (1) for dissolution in water, comprising a water soluble packaging material (2,3) which is sealed to form the filled package (1), the filled package (1) containing an aqueous syrup of at least one substance, characterised in that the water soluble packaging material is in the form of a heat sealable flexible film (2,3) which is sealed to form the filled package (1), in that the water soluble packaging material is of methyl cellulose or derivatives thereof or polyvinyl alcohol and is capable of dissolving once wetted externally with water, in that the aqueous syrup is a concentrated aqueous syrup in which said substance has a concentration which is sufficiently high so that at room temperature the aqueous syrup is retained within the filled package (1) and does not attack or dissolve the packaging material to the extent that over the desired storage range period the filled package (1) is ruptured and in that the combination of said packaging material in the form of said heat sealable flexible film (2,3) and said concentration of said substance in said concentrated aqueous syrup enables dissolution of said film (2,3) and of said concentrated aqueous syrup once the packaging material has been wetted externally with water.

2. A package as claimed in claim 1, characterised in that said packaging material has a dissolution temperature of from about 45°C to about 85°C.

3. A package as claimed in claim 1 or 2, characterised in that said film (2,3) has been heat sealed to form an hermetically sealed filled package.

4. A package as claimed in claim 1 or 2, characterised in that said film (2,3) has been sealed by an adhesive material to form said filled package.

5. A package as claimed in any one of claims 1 to 4, characterised in that said packaging material acts as a thickener to the dissolved filled package.

6. A package as claimed in any one of claims 1 to 5, characterised in that said film has an internal and/or external water soluble coating to assist in retention of said syrup within the filled package.

7. A package as claimed in claim 6, characterised in that the coating is a sugar or a salt.

8. A package as claimed in any one of claims 1 to 7, characterised in that said packaging material is methyl cellulose or derivatives thereof and in that both said film (2,3) and said syrup are edible.

9. A package as claimed in any one of claims 1 to 8, characterised in that said syrup contains honey, or mixtures of honey with other substances.

10. A package as claimed in any of claim 1 to 8, characterised in that said syrup contains sugar or mixtures of sugars, alone or in admixture with other substances.

11. A package as claimed in any one of claims 1 to 8, characterised in that said syrup contains at least one of the following; a flavouring, an essence, a salt, a meat extract, a medicine or a beverage concentrate.

12. A package as claimed in any one of claims 1 to 11, characterised in that said packaging material contains a colouring and/or a flavouring.

13. A package as claimed in any one of claims 1 to 7 characterised in that said packaging material is polyvinyl alcohol and in that said syrup contains or consists of a toiletry or agricultural chemical substance.

14. A package as claimed in any one of the claims 1 to 13, characterised in that said packaging material includes additives to suppress oxygen penetration through said film (2,3).

15. A package as claimed in any one of claims 1 to 14, characterised in that said syrup also contains a thickener.

16. A package as claimed in claim 15, characterised in that said packaging material and the thickener are of the same or of a different material.

17. A package as claimed in any one of claims 1 to 16, characterised in that said syrup includes a carrier such as a sugar, honey or salt for the active ingredient of the substance.

18. A method of packaging at least one substance, in which a water soluble packaging material (2,3) is sealed to form a filled package (1) containing an aqueous syrup of at least one substance, characterised by providing a heat sealable flexible film (2,3) formed from a water soluble packaging material of methyl cellulose or derivatives thereof or polyvinyl alcohol which is capable of dissolving once wetted externally with water, forming a package from said film (2,3) and filling the package with a concentrated aqueous syrup of said substance which is retained within the filled package (1) by having a concentration of the substance in the aqueous syrup that is sufficient to prevent the water in the aqueous syrup from attacking and dissolving the packaging material until the packaging material is wetted externally with water, the combination of said packaging material and said concentration of said substance in said aqueous syrup enabling dissolution of said film (2,3) and of said aqueous syrup once said packaging material has been wetted externally with water.

19. A method as claimed in claim 18, characterised in that packaging material is provided with an internal and/or external water soluble coating which assists in retention of said syrup within the filled package (1).

20. A method as claimed in claim 18 to 19, characterised in that said packaging material acts as a thickener to said syrup when said packaging material has dissolved.

21. A method as claimed in any one of claims 18 to 20, characterised in that said syrup includes a thickener which is the same material as, or a different material from, that of said packaging material.

22. A method as claimed in any one of claims 18 to 21, characterised in that said packaging material has a dissolution temperature of from about 45°C to about 85°C.

23. A method as claimed in any one of claims 18 to 21, characterised in that said packaging material has a dissolution temperature of about 45°C.

24. A method as claimed in any one of claims 18 to 21, characterised in that said packaging material has a dissolution temperature of about 65°C.

25. A method as claimed in any one of claims 18 to 21, characterised in that said packaging material has a dissolution temperature of about 85°C.

26. A method as claimed in any one of claims 18 to 25, characterised in that said syrup includes a carrier such as a sugar, honey or a salt for the active ingredient of the substance.

27. A method as claimed in any one of the claims 18 to 26, characterised in that said filled package (1) is sealed by heat sealing said film (2,3).

28. A method as claimed in any one of claims 18 to 26, characterised in that said filled package (1) is sealed by an adhesive material.

## Patentansprüche

1. Gefüllte Verpackung (1) zum Lösen in Wasser, die ein wasserlösliches Verpackungsmaterial (2, 3) umfaßt, das verschlossen ist, um eine gefüllte Verpackung (1) zu bilden, wobei die gefüllte Verpakkung (1) einen wasserhaltigen Sirup aus wenigstens einer Substanz enthält, dadurch gekennzeichnet, daß das wasserlösliche Verpackungsmaterial in Form eines heißsiegelfähigen flexiblen Films (2, 3) vorliegt, der versiegelt ist, um die gefüllte Verpackung (1) zu bilden, daß das wasserlösliche Verpackungsmaterial aus Methylcellulose oder Derivaten davon oder Polyvinylalkohol besteht und fähig ist, sich aufzulösen, wenn es von außen mit Wasser benetzt wird, daß der wasserhaltige Sirup ein konzentrierter wasserhaltiger Sirup ist, bei den, die genannte Substanz eine Konzentration aufweist, die ausreichend hoch ist, so daß bei Raumtemperatur der wasserhaltige Sirup in der gefüllten Verpackung (1) zurückgehalten wird und das Verpackungsmaterial nicht in dem Maße angreift oder löst, daß über den gewünschten Lagerdauerbereich die gefüllte Verpackung (1) zerreißt, und daß die Kombination des genannten Verpackungsmaterials in Form des genannten heißsiegelfähigen flexiblen Films (2, 3) und der genannten Konzentration der genannten Substanz in dem genannten konzentrierten wasserhaltigen Sirup das Lösen des genannten Films (2, 3) und des genannten konzentrierten wasserhaltigen Sirups ermöglicht, wenn das Verpackungsmaterial von außen mit Wasser benetzt wurde.

2. Verpackung nach Anspruch 1, dadurch gekennzeichnet, daß das genannte Verpackungsmaterial eine Lösungstemperatur von etwa 45°C bis etwa 85°C hat.

3. Verpackung nach Anspruch 1 oder 2, dadurch gekennzeichnet, daß der genannte Film (2, 3) heißgesiegelt wurde, um eine hermetisch abgeschlossene gefüllte Verpackung zu bilden.

4. Verpackung nach Anspruch 1 oder 2, dadurch gekennzeichnet, daß der genannte Film (2, 3) mit einem Klebstoff verschlossen wurde, um die genannte gefüllte Verpackung zu bilden.

5. Verpackung nach einem der Ansprüche 1 bis 4, dadurch gekennzeichnet, daß das genannte Verpackungsmaterial als ein Verdickungsmittel für die gelöste gefüllte Verpackung wirkt.

6. Verpackung nach einem der Ansprüche 1 bis 5, dadurch gekennzeichnet, daß der genannte Film einen inneren und/oder äußeren wasserlöslichen Überzug aufweist, um das Zurückhalten des genannten Sirups in der gefüllten Verpackung zu unterstützen.

7. Verpackung nach Anspruch 6, dadurch gekennzeichnet, daß der Überzug ein Zucker oder ein Salz ist.

8. Verpackung nach einem der Ansprüche 1 bis 7, dadurch gekennzeichnet, daß das genannte Verpackungsmaterial Methylcellulose oder Derivate davon ist und daß sowohl der genannte Film (2, 3) als auch der genannte Sirup genießbar sind.

9. Verpackung nach einem der Ansprüche 1 bis 8, dadurch gekennzeichnet, daß der genannte Sirup Honig oder Mischungen aus Honig mit anderen Substanzen enthält.

10. Verpackung nach einem der Ansprüche 1 bis 8, dadurch gekennzeichnet, daß der genannte Sirup Zucker oder Mischungen von Zuckern allein oder in Beimengung mit anderen Substanzen enthält.

11. Verpackung nach einem der Ansprüche 1 bis 8, dadurch gekennzeichnet, daß der genannte Sirup wenigstens eines der folgenden enthält: einen Geschmacksstoff, eine Essenz, ein Satz, einen Fleischextrakt, ein Medikament oder ein Getränkekonzentrat.

12. Verpackung nach einem der Ansprüche 1 bis 11, dadurch gekennzeichnet, daß das genannte Verpackungsmaterial einen Farbstoff und/oder einen Geschmacksstoff enthält.

13. Verpackung nach einem der Ansprüche 1 bis 7, dadurch gekennzeichnet, daß das genannte Verpackungsmaterial Polyvinylalkohol ist und daß der genannte Sirup einen Toilettenartikel oder eine agrochemische Substanz enthält oder daraus besteht.

14. Verpackung nach einem der Ansprüche 1 bis 13, dadurch gekennzeichnet, daß das genannte Verpackungsmaterial Additive umfaßt, um das Eindringen von Sauerstoff durch den genannten Film (2, 3) zu unterdrücken.

15. Verpackung nach einem der Ansprüche 1 bis 14, dadurch gekennzeichnet, daß das genannte Sirup auch ein Verdickungsmittel enthält.

16. Verpackung nach Anspruch 15, dadurch gekennzeichnet, daß das genannte Verpackungsmaterial und das Verdickungsmittel aus demselben oder unterschiedlichem Material sind.

17. Verpackung nach einen, der Ansprüche 1 bis 16, dadurch gekennzeichnet, daß der genannte Sirup einen Träger, wie zum Beispiel einen Zucker, Honig oder Salz für den aktiven Wirkstoff der Substanz umfaßt.

18. Verfahren zum Verpacken wenigstens einer Substanz, bei dem das wasserlösliche Verpackungsmaterial (2, 3) verschlossen wird, um eine gefüllte Verpackung (1) zu bilden, die einen wasserhaltigen Sirup aus wenigstens einer Substanz enthält, gekennzeichnet durch die Bereitstellung eines aus einem wasserlöslichen Verpackungsmaterial aus Methylcellulose oder Derivaten davon oder Polyvinylalkohol gebildeten, heißsiegelfähigen flexiblen Films (2, 3), welcher fähig ist, sich aufzulösen, wenn er von außen mit Wasser benetzt wird, Bilden einer Verpackung aus dem genannten Film (2, 3) und Füllen der Verpackung mit einem konzentrierten wasserhaltigen Sirup der genannten Substanz, die in der gefüllten Verpackung (1) zurückgehalten wird, indem die Substanz in dem wasserhaltigen Sirup eine Konzentration aufweist, die ausreichend ist, um zu verhindern, daß das Wasser in dem wasserhaltigen Sirup das Verpackungsmaterial angreift und löst, bis das Verpackungsmaterial von außen mit Wasser benetzt wird, wobei die Kombination aus dem genannten Verpackungsmaterial und der genannten Konzentration der genannten Substanz in dem genannten wasserhaltigen Sirup die Lösung des genannten Films (2, 3) und des genannten wasserhaltigen Sirups ermöglicht, wenn das genannte Verpackungsmaterial von außen mit Wasser benetzt wurde.

19. Verfahren nach Anspruch 18, dadurch gekennzeichnet, daß das genannte Verpackungsmaterial mit einem inneren und/oder äußeren wasserlöslichen Überzug versehen wird, der das Zurückhalten des genannten Sirups in der gefüllten Verpackung (1) unterstützt.

20. Verfahren nach Anspruch 18 bis 19, dadurch gekennzeichnet, daß das genannte Verpackungsmaterial als ein Verdickungsmittel für den genannten Sirup wirkt, wenn das genannte Verpackungsmaterial sich aufgelöst hat.

21. Verfahren nach einem der Ansprüche 18 bis 20, dadurch gekennzeichnet, daß der genannte Sirup ein Verdickungsmittel umfaßt, das dasselbe Material wie das genannte Verpackungsmaterial oder ein davon verschiedenes Material ist.

22. Verfahren nach einem der Ansprüche 18 bis 21, dadurch gekennzeichnet, daß das genannte Verpackungsmaterial eine Lösungstemperatur von etwa 45°C bis etwa 85°C hat.

23. Verfahren nach cinem der Ansprüche 18 bis 21, dadurch gekennzeichnet, daß das genannte Verpackungsmaterial eine Lösungstemperatur von etwa 45°C hat.

24. Verfahren nach einem der Ansprüche 18 bis 21, dadurch gekennzeichnet, daß das genannte Verpackungsmaterial eine Lösungstemperatur von etwa 65°C hat.

25. Verfahren nach einem der Ansprüche 18 bis 21, dadurch gekennzeichnet, daß das genannte Verpackungsmaterial eine Lösungstemperatur von etwa 85°C hat.

26. Verfahren nach einem der Ansprüche 18 bis 25, dadurch gekennzeichnet, daß der genannte Sirup einen Träger, wie zum Beispiel einen Zucker, Honig oder ein Salz, für den Wirkstoff der Substanz umfaßt.

27. Verfahren nach einem der Ansprüche 18 bis 26, dadurch gekennzeichnet, daß die genannte gefüllte Verpackung (1) durch Heißsiegeln des genannten Films (2, 3) verschlossen wird.

28. Verfahren nach einen, der Ansprüche 18 bis 26, dadurch gekennzeichnet, daß die genannte gefüllte Verpackung (1) mit einem Klebstoff verschlossen wird.

## Revendications

1. Conditionnement rempli (1) à dissoudre dans de l'eau, comprenant un matériau de conditionnement (2, 3) soluble dans l'eau qui est scellé pour former le conditionnement rempli (1), le conditionnement rempli (1) contenant un sirop aqueux d'au moins une substance, caractérisé en ce que le matériau de conditionnement soluble dans l'eau est sous la forme d'un film flexible thermosoudable (2,3) qui est cellé pour former le conditionnement rempli (1), en ce que le matériau de conditionnement soluble dans l'eau est en méthylcellulose ou en dérivés de ce dernier ou en alcool polyvinylique et est capable de se dissoudre une fois mouillé extérieurement avec de l'eau, en ce que le sirop aqueux est un sirop aqueux concentré dans lequel ladite substance a une concentration qui est suffisamment élevée de sorte qu'à température ambiante, le sirop aqueux est maintenu à l'intérieur du conditionnement rempli (1), et n'attaque pas ni ne dissout le matériau de conditionnement de sorte qu'au cours de la période de stockage désirée, le conditionnement rempli (1) soit rompu, et en ce que la combinaison dudit matériau de conditionnement sous la forme dudit film flexible thermosoudable (2, 3) et de ladite concentration de ladite substance dans ledit sirop aqueux concentré permet la dissolution dudit film (2,3) et dudit sirop aqueux concentré une fois que le matériau de conditionnement a été mouillé extérieurement avec de l'eau.

2. Conditionnement selon la revendication 1, caractérisé en ce que ledit matériau de conditionnement a une température de dissolution d'environ 45°C à environ 85°C.

3. Conditionnement selon la revendication 1 ou la revendication 2, caractérisé en ce que ledit film (2,3) a été thermosoudé pour former un conditionnement rempli scellé hermétiquement.

4. Conditionnement selon la revendication 1 ou la revendication 2, caractérisé en ce que ledit film (2, 3) a été scellé par un matériau adhésif pour former ledit conditionnement rempli.

5. Conditionnement selon l'une quelconque des revendications 1 à 4, caractérisé en ce que ledit matériau de conditionnement agit comme un épaississement pour le conditionnement rempli dissous.

6. Conditionnement selon l'une quelconque des revendications 1 à 5, caractérisé en ce que ledit film a un revêtement interne et/ou externe soluble dans l'eau pour aider à la rétention dudit sirop à l'intérieur du conditionnement rempli.

7. Conditionnement selon la revendication 6, caractérisé en ce que le revêtement est un sucre ou un sel.

8. Conditionnement selon l'une quelconque des revendications 1 à 7, caractérisé en ce que ledit matériau de conditionnement est de la méthylcellulose ou des dérivés de celle-ci et en ce que ledit film (2,3) et ledit sirop sont comestibles.

9. Conditionnement selon l'une quelconque des revendications 1 à 8, caractérisé en ce que ledit sirop contient du miel, ou des mélanges de miel avec d'autres substances.

10. Conditionnement selon l'une quelconque des revendications 1 à 8, caractérisé en ce que ledit sirop contient du sucre ou des mélanges de sucres, seuls ou en mélange avec d'autes substances.

11. Conditionnement selon l'une quelconque des revendications 1 à 8, caractérisé en ce que ledit sirop contient au moins un des éléments suivants : un arôme, une essence, un sel, un extrait de viande, un médicament ou un concentré de boisson.

12. Conditionnement selon l'une quelconque des revendications 1 à 11, caractérisé en ce que ledit matériau de conditionnement contient un colorant et/ou un arôme.

13. Conditionnement selon l'une quelconque des revendications 1 à 7, caractérisé en ce que ledit matériau de conditionnement est de l'alcool polyvinylique et en ce que ledit sirop contient ou est constitué d'une substance chimique agricole ou pour article de toilette.

14. Conditionnement selon l'une quelconque des revendications 1 à 13, caractérisé en ce que ledit matériau de conditionnement comprend des additifs pour supprimer la pénétration de l'oxygène à travers ledit film (2,3).

15. Conditionnement selon l'une quelconque des revendications 1 à 14, caractérisé en ce que ledit sirop contient également un épaississant.

16. Conditionnement selon la revendication 15, caractérisé en ce que ledit matériau de conditionnement et l'épaississant sont du même matériau ou d'un matériau différent.

17. Conditionnement selon l'une quelconque des revendications 1 à 16, caractérisé en ce que ledit sirop comprend un porteur tel qu'un sucre, du miel ou un sel pour l'ingrédient actif de la substance.

18. Procédé de conditionnement d'au moins une substance, dans lequel un matériau de conditionnement soluble dans l'eau (2, 3) est scellé pour former un conditionnement rempli (1) contenant un sirop aqueux d'au moins une substance, caractérisé par le fait de fournir un film flexible thermosoudable (2,3) formé à partir d'un matériau de conditionnement soluble dans l'eau constitué de méthylcellulose ou de dérivés de celle-ci ou d'alcool polyvinylique qui est capable de se dissoudre une fois mouillé extérieurement avec de l'eau, former un conditionnement à partir dudit film (2,3) et remplir le conditionnement avec un sirop aqueux concentré de ladite substance qui est maintenue à l'intérieur du conditionnement rempli (1) en ayant une concentration de la substance dans le sirop aqueux qui est suffisante pour empêcher que l'eau dans le sirop aqueux n'attaque et dissolve le matériau de conditionnement jusqu'à ce que le matériau de conditionnement soit mouillé extérieurement avec de l'eau, la combinaison dudit matériau de conditionnement et de ladite concentration de ladite substance dans ledit sirop aqueux permettant la dissolution dudit film (2,3) et dudit sirop aqueux une fois que ledit matériau de conditionnement a été mouillé extérieurement avec de l'eau.

19. Procédé selon la revendication 18, caractérisé en ce que ledit matériau de conditionnement est pourvu d'un revêtement interne et/ou externe soluble dans l'eau qui aide à la rétention dudit sirop à l'intérieur dudit conditionnement rempli (1).

20. Procédé selon la revendication 18 ou la revendication 19, caractérisé en ce que ledit matériau de conditionnement agit comme épaississant pour ledit sirop lorsque ledit matériau de conditionnement s'est dissous.

21. Procédé selon l'une quelconque des revendications 18 à 20, caractérisé en ce que ledit sirop comprend un épassissant qui est le même matériau ou un matériau différent de celui dudit matériau de conditionnement.

22. Procédé selon l'une quelconque des revendications 18 à 21, caractérisé en ce que ledit matériau de conditionnement a une température de dissolution d'environ 45°C à environ 85°C.

23. Procédé selon l'une quelconque des revendications 18 à 21, caractérisé en ce que ledit matériau de conditionnement a une température de dissolution d'environ 45°C.

24. Procédé selon l'une quelconque des revendications 18 à 21, caractérisé en ce que ledit matériau de conditionnement a une température de dissolution d'environ 65°C.

25. Procédé selon l'une quelconque des revendications 18 à 21, caractérisé en ce que ledit matériau de conditionnement a une température de dissolution d'environ 85°C.

26. Procédé selon l'une quelconque des revendications 18 à 25, caractérisé en ce que ledit sirop comprend un porteur tel qu'un sucre, du miel ou un sel pour l'ingrédient actif de la substance.

27. Procédé selon l'une quelconque des revendications 18 à 26, caractérisé en ce que ledit conditionnement rempli (1) est scellé par thermosoudage dudit film (2,3).

28. Procédé selon l'une quelconque des revendications 18 à 26, caractérisé en ce que ledit conditionnement rempli (1) est scellé par un matériau adhésif.
